(19)

Europäisches Patentamt

European Patent Office

Office européen des brevets

(11) **EP 4 671 095 A1**

(12) **EUROPEAN PATENT APPLICATION**

(43) Date of publication:
**31.12.2025 Bulletin 2026/01**

(21) Application number: **25184443.7**

(22) Date of filing: **23.06.2025**

(51) International Patent Classification (IPC):
***B62D 35/00*** (2006.01)     ***B62D 37/02*** (2006.01)

(52) Cooperative Patent Classification (CPC):
**B62D 35/00; B62D 37/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.06.2024  IT 202400014566**

(71) Applicant: **FERRARI S.p.A.**
**41100 Modena (IT)**

(72) Inventors:
- **RONCHI, Marta**
  **41100 MODENA (IT)**
- **MINCIGRUCCI, Francesca**
  **41100 MODENA (IT)**
- **ZAMPIERI, Alberto**
  **41100 MODENA (IT)**

(74) Representative: **Studio Torta S.p.A.**
**Via Viotti, 9**
**10121 Torino (IT)**

(54) **PREDICTIVE CONTROL SYSTEM FOR ACTIVE AERODYNAMIC APPENDAGES  IN A ROAD VEHICLE**

(57)     A system for controlling at least one active aerodynamic appendage (12) of a road vehicle (1) is described, comprising an actuation control unit (14) operating to implement a predictive control of the active aerodynamic appendage (12), based on an estimation, performed dynamically while the road vehicle (1) is in motion, of an aerodynamic load demand of the road vehicle (1) in a route section subsequent to one currently travelled.

FIG.2

**Description**

CROSS-REFERENCE TO RELATED APPLICATIONS

This patent application claims priority from Italian patent application no. 102024000014566 filed on June 25, 2024, the entire disclosure of which is incorporated herein by reference.

TECHNICAL FIELD

The present solution relates to a predictive control system for active aerodynamic appendages in a road vehicle, specifically aimed at performance driving, e.g. on a racetrack.

PRIOR ART

As known, some road vehicles, in particular high-performance road vehicles, are provided with active aerodynamic appendages, such as a wing or rear aileron, a front spoiler or splitter, flaps, air vents, or similar elements in one or more units.

The configuration of these active aerodynamic appendages can be adjusted while the road vehicle is in motion by a corresponding control unit, in order to adapt the resulting aerodynamic load to the dynamic conditions of the moving vehicle, e.g. to a corresponding travel speed or longitudinal or lateral acceleration.

In particular, the dynamic adjustment of these active aerodynamic appendages makes it possible to generate an increase in aerodynamic load in situations when the vehicle requires more grip, for example while cornering or braking, or a reduction in this aerodynamic load in situations when the vehicle is desired to offer less air drag, for example while longitudinally accelerating along a straight line.

This dynamic adjustment makes it generally possible to increase the safety and stability of the road vehicle and, in performance driving situations, especially on the racetrack, allows to increase the vehicle performance and to reduce the so-called lap time, i.e. the time required to cover a full lap of the racetrack.

Currently, the control unit responsible for adjusting the active aerodynamic appendages is configured to detect, by means of suitable sensors, one or more quantities indicative of a current dynamic condition of the road vehicle, which is a function of the driver's demands (e.g. in terms of acceleration, braking or steering angle); and to adjust the aforesaid active aerodynamic appendages in response to the detected dynamic condition.

The solutions currently used to control the active aerodynamic appendages, while functional, have certain problems that do not allow their potential benefits to be fully exploited.

An aim of this solution is in general to provide a system for controlling active aerodynamic appendages in a road vehicle with improved performance.

DESCRIPTION OF THE INVENTION

The aforesaid aim is achieved by a system and a method, as defined in the attached claims.

BRIEF DESCRIPTION OF THE DRAWINGS

In the following, an embodiment of the invention is described for a better understanding thereof by way of nonlimiting example and with reference to the accompanying drawings wherein:

- Figure 1 schematically shows a road vehicle provided with at least one active aerodynamic appendage and a control system for the active aerodynamic appendage;
- Figure 2 is a flow chart of operations performed by the control system in Figure 1;
- Figures 3A-3C and 4A-4C show plots related to quantities related to the control system;
- Figure 5 is a flow chart of further operations performed by the control system;
- Figure 6 is a schematic representation of a racetrack whose track is divided into sectors; and
- Figures 7A-7C show further plots related to quantities related to the control system.

PREFERRED EMBODIMENTS OF THE INVENTION

One aspect of the present solution results from the realisation by the Applicant that a control of active aerodynamic appendages based on the detection of the vehicle dynamic response (physically lagging behind the driver's requests) generally results in a corresponding delay in activating the most appropriate adjustment of the same aerodynamic appendages.

As will be described in detail hereinafter, one aspect of the present solution therefore involves implementing a predictive control of at least one active aerodynamic appendage in a road vehicle, based on an estimation, performed dynamically while the vehicle is in motion, of a vehicle aerodynamic load demand in a route section subsequent to one currently travelled.

In particular, in the event that the performed estimation determines a grip limited condition, the predictive control is configured to implement, in advance of the occurrence of this grip limited condition, an appropriate adjustment of the active aerodynamic appendages such as to determine an increase in aerodynamic load.

This predictive control therefore makes it possible to anticipate the maximum load demand (avoiding the delays associated with the detection of the vehicle dynamics), in all grip-limited conditions (e.g. when braking, and when cornering), and in particular to anticipate and/or maintain the maximum aerodynamic load in these conditions, to the benefit of the vehicle stability and of an increase in performance (e.g. a reduction in lap time when the vehicle is used on a racetrack).

In a corresponding manner, in the event that the performed estimation determines a forthcoming condition where a reduction in the vehicle aerodynamic drag is required, the predictive control is configured to implement, again in advance of the occurrence of this condition, an adjustment of the active aerodynamic appendages such that a decrease in the aerodynamic load is determined.

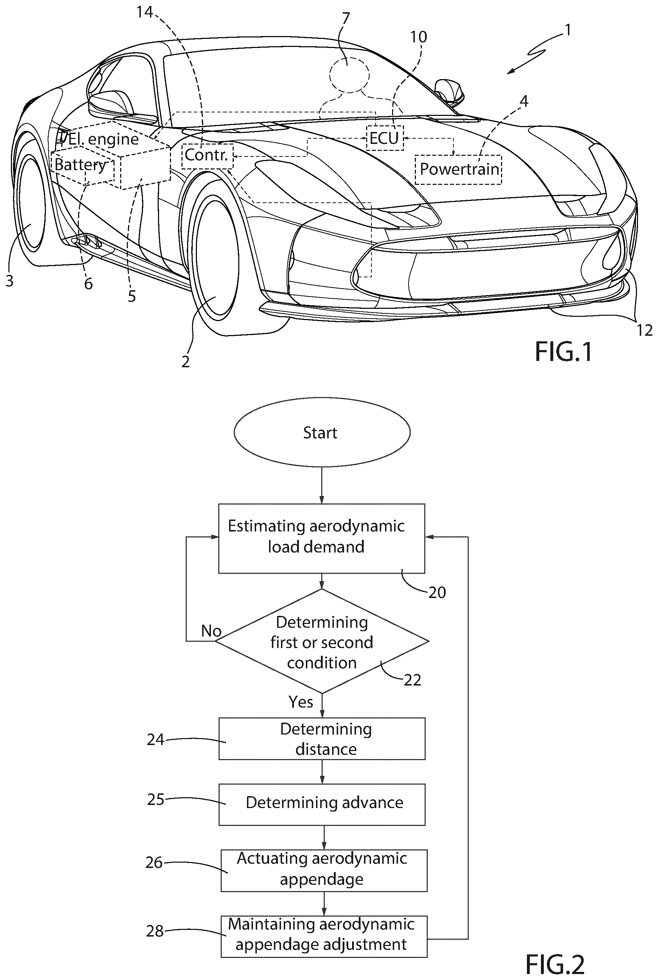

In Figure 1, reference 1 globally denotes a road vehicle driven by a driver 7 and provided with two front wheels 2 (thus belonging to a same axle, the front one) and two rear wheels 3 (thus belonging to a same axle, the rear one); at least one of these front or rear axles receiving a drive torque from a powertrain 4 of the road vehicle 1.

For example, the powertrain 4 comprises at least one auxiliary engine, in particular an electric engine 5, in addition to and in support of an endothermic engine of a known type, not shown herein; this electric engine 5 is connected (so as to bidirectionally exchange electrical energy) with a battery pack 6. The electric engine 5 is, for example, arranged longitudinally at the rear and transversely in the middle of the road vehicle 1. In the example, the electric engine 5 is mechanically connected to the rear wheels 3, so as to deliver an additional torque thereto in addition to the one delivered by the endothermic engine.

The road vehicle 1 comprises an electronic control unit ("ECU") 10 which, among other functions, controls the behaviour of the road vehicle 1 by acting on the torque delivered by the powertrain 4, possibly in cooperation with other actuations on board the road vehicle 1.

Physically, the electronic control unit 10 may consist of a single device or of several devices that are separate from and communicating with each other, e.g. via the CAN network of the road vehicle 1.

The road vehicle 1 further comprises: at least one active aerodynamic appendage 12, consisting, in the example shown, of an adjustable wing or front flap (it is however clear that this active aerodynamic appendage 12 may be of a different type, for example a rear spoiler, a splitter, an air vent or the like, with the possibility, furthermore, that there may be one or more units of a similar or different type); and an actuation control unit 14, configured to control, in particular according to a predictive control algorithm (as will be described in detail hereinafter) the operation or actuation of the active aerodynamic appendage 12.

In a known manner, not shown herein, the actuation of the active aerodynamic appendage 12 (e.g. in the form of a position or configuration adjustment) is implemented by means of one or more actuators, e.g. of the electric or hydraulic type, appropriately driven by the actuation control unit 14.

This actuation control unit 14, comprising a microprocessor, microcontroller, DSP or other digital processing unit, even if shown physically separate from the electronic control unit 10, may be part of (or consist of) the same electronic control unit 10.

The actuation control unit 14 is configured to implement a predictive control algorithm for the actuation of the active aerodynamic appendage 12, aimed at increasing the safety and performance of the road vehicle 1, especially for performance driving on the racetrack.

As shown in Figure 2, this algorithm comprises, continuously and in real time (or "on-line") while the road vehicle 1 is in motion, in particular along the route of a racetrack, the step, denoted by 20, of dynamically estimating the aerodynamic load demand of the road vehicle 1 in a section or zone of the route subsequent to the one currently travelled by the same road vehicle 1.

The dynamic estimation aims to identify, step 22, in the zone of the route that the road vehicle 1 is about to travel, either a first condition requiring a first aerodynamic load, in particular a high aerodynamic load, i.e. a so-called "grip-limited" condition; or a second condition requiring a second aerodynamic load, lower than the first one, in particular a low aerodynamic load.

In the event that it detects the first or second condition, the actuation control unit 14 is configured to determine a distance from the forthcoming zone requiring the respective high or low aerodynamic load, as indicated in step 24; this distance may be a spatial distance, which may also be converted into a time distance, as a function of a speed of the road vehicle 1 (as indicated hereinafter, the actuation control unit 14 is configured to determine an optimal or desired speed profile of the road vehicle 1 along the route to be travelled).

The actuation control unit 14 also determines, step 25, a suitable time advance with respect to the aforementioned zone requiring the respective aerodynamic load (and with respect to the aforesaid time distance), so as to take into account an actuation time required for actuating the active aerodynamic appendage 12 (this actuation time is generally known, e.g. from a bench characterisation of the active aerodynamic appendage 12).

Subsequently, step 26, the same actuation control unit 14 determines the actuation of the active aerodynamic appendage 12 at a time instant that is a function of the aforesaid time advance.

Following actuation of the active aerodynamic appendage 12, the actuation control unit 14 is also configured to maintain the set adjustment (of high or low aerodynamic load) for a given holding interval, as indicated in step 28.

This holding time interval is such that the desired aerodynamic load configuration is ensured for the duration of the respective first or second condition, e.g. a high load configuration throughout the duration of a performed braking or throughout a cornering of the racetrack.

The operations performed by the actuation control unit 14 are now described in more detail, firstly in the case of estimating a braking condition of the road vehicle 1.

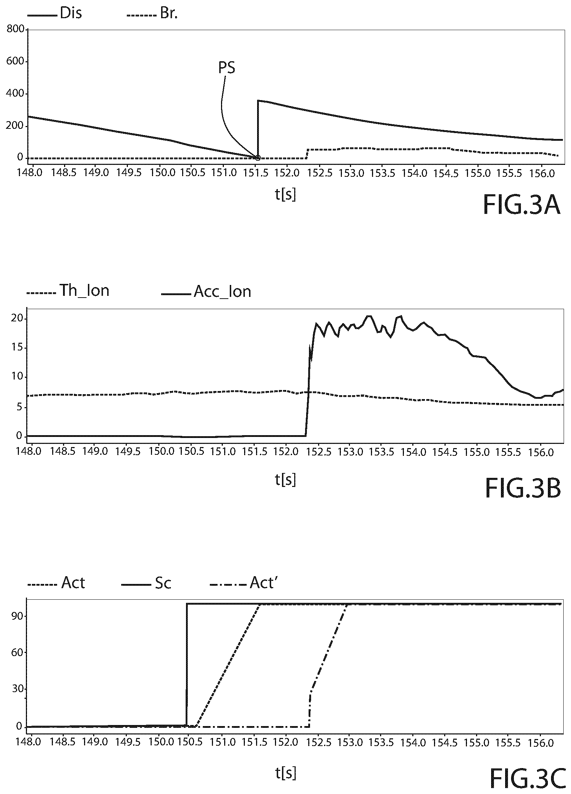

In this regard, Figure 3A shows in a continuous line the trend (as a function of time, expressed in seconds) of a signal Dis indicative of a distance estimated from a subsequent braking point PS (i.e. at which the driver 7 of the road vehicle 1 is estimated to actuate the brakes in order to implement a braking in a subsequent zone of the route, e.g. before travelling through a cornering section). As will also be described hereinafter, this signal Dis can be determined according to a desired, or optimised, speed profile of the road vehicle 1 along the route to be travelled.

In Figure 3A, a signal Br indicative of the actual actuation of the brakes of the road vehicle 1 by the driver 7 is shown as a dotted line; in particular, the actuation of the brakes by the driver 7 occurs at a certain distance from the estimated braking point PS, resulting in a time instant subsequent to that point PS.

Figure 3B shows in a continuous line a longitudinal acceleration signal Acc_lon, indicative of the dynamic response of the road vehicle 1, in response to a braking command from the driver 7. In the same Figure 3B, a longitudinal acceleration threshold Th_lon is shown as a dotted line.

This threshold can be determined on the basis of characteristic parameters of the road vehicle 1 (such as mass, weight distribution, estimated grip, reference aerodynamic load) and is defined as a threshold above which a condition of high aerodynamic load is desired, for example to maximise braking.

Figure 3C shows as a continuous line a command signal Sc which is provided by the actuation control unit 14 to determine the actuation of the active aerodynamic appendage 12, in advance relative to the estimated braking point (this advance taking into account the actuation time of the active aerodynamic appendage 12, as indicated above).

In the same Figure 3C, an actuation signal Act indicative of the actuation of the active aerodynamic appendage 12, in response to the aforesaid command signal Sc provided by the actuation control unit 14, is shown as a dotted line.

In substance, given the evolution of the signal Dis indicative of the estimated distance to the subsequent breaking point PS, the actuation control unit 14 is able to calculate, instant by instant, the time distance to the estimated breaking point, given the speed of the road vehicle 1. When this estimated time interval is close to the time interval required to actuate the active aerodynamic appendage 12, the actuating control unit 14 provides the command signal Sc, which makes it possible to actuate in advance the maximum load configuration demand, so that the active aerodynamic appendage 12 can already be in the correct position at the beginning of braking and can also be maintained in that position for the duration of the "grip limited" condition (for example, throughout the duration of the braking), to the benefit of an increase in stability of the road vehicle 1.

Figure 3C also shows in a dash-dot line, for the purposes of visual comparison, what would be the actuation signal Act' of the active aerodynamic appendage 12, should reference be made (as in known solutions) to the dynamic response of the road vehicle 1, in particular upon exceeding the longitudinal acceleration threshold Th_lon by the longitudinal acceleration signal Acc_lon. In particular, it is evident the delay with which the desired configuration of the active aerodynamic appendage 12 would be carried out in that case in relation to the actual braking point, with a consequent disadvantage in terms of stability and performance of the road vehicle 1.

The operations performed by the actuation control unit 14 are now described in more detail, in the case of estimating a condition of the road vehicle 1 travelling along a cornering section which again requires a high aerodynamic load.

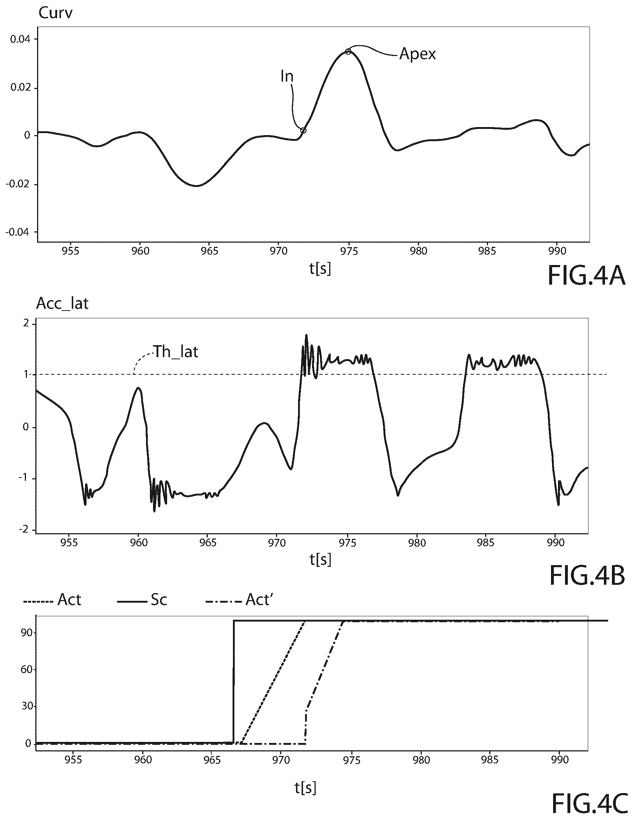

In particular, Figure 4A shows in this case an estimated curvature signal Curv related to the route to be travelled (e.g. of a racetrack) as a function of the travel time, wherein the so-called central point ("Apex"), at which the curvature signal has a local maximum/minimum value, is highlighted for a given cornering section.

Figure 4A also shows a corner starting point In, which can be identified as the point prior to the aforesaid Apex point at which the value of the estimated curvature signal Curv exceeds a percentage (e.g. 10%) of the subsequent local maximum/minimum value. In particular, given the speed of the road vehicle 1, it is possible to calculate the time in advance of the Apex point at which the corner starting point In is identified.

Figure 4B shows in a continuous line a lateral acceleration signal Acc_lat, indicative of the dynamic response of the road vehicle 1 as it travels through the cornering section. In the same Figure 4B, a lateral acceleration threshold Th_lat is shown as a dotted line.

Similarly to what has been discussed above, this threshold can be determined on the basis of characteristic parameters of the car (mass, weight distribution, estimated grip, reference aerodynamic load) and defined as the threshold for identifying the condition of high aerodynamic load in cornering.

According to an aspect of the present solution, the step of estimating the aerodynamic load demand of the road vehicle 1 in the cornering section first comprises an evaluation of the lateral acceleration Acc_lat.

In particular, the actuation control unit 14 assesses whether at the Apex point of the cornering section, the value of the lateral acceleration Acc_lat exceeds a given acceleration threshold, which may for example coincide with the aforementioned lateral acceleration threshold Th_lat. If this is the case, a grip-limited condition is determined for this cornering, with a high aerodynamic load demand (correspondingly, if this is not the case, i.e. if the value of the lateral acceleration Acc_lat is lower than or equal to the lateral acceleration threshold Th_lat, the high aerodynamic load demand is not determined).

The actuation control unit 14 then determines the advance (as a distance and the corresponding time) with which it is appropriate to activate the movement of the active aerodynamic appendage 12, in order to cover with the maximum aerodynamic load also the phase of entering the corner, anticipating the Apex point.

Figure 4C shows in a continuous line the command signal Sc provided by the actuation control unit 14 to determine the actuation of the active aerodynamic appendage 12, with the aforesaid time advance with respect to the estimated Apex point (advance which, as indicated above, allows the entire cornering section to be travelled with the maximum aerodynamic load).

In the same Figure 4C, the actuation signal Act indicative of the actuation of the active aerodynamic appendage 12, in response to the aforesaid command signal Sc provided by the actuation control unit 14, is shown as a dotted line.

In addition, also in this case the dash-dot line shows what would be the actuation signal Act' of the active aerodynamic appendage 12, should reference be made for determining its actuation (as in known solutions) to the dynamic response of the road vehicle 1, in particular upon exceeding the lateral acceleration threshold Th_lat by the lateral acceleration signal Acc_lat. In this case also, the delay with which the desired configuration of the active aerodynamic appendage 12 would then be carried out in relation to the travel of the cornering section is evident, with a consequent disadvantage in terms of stability and performance of the road vehicle 1.

It should be noted, based on what has been discussed above, that the solution described allows to anticipate the demand for maximum aerodynamic load even in the case of corners not preceded by braking, which in any case involve the aforesaid "grip-limited" condition.

More generally, the actuation control unit 14 can be configured to estimate a "grip limited" condition by combining the two evaluations of "braking" and "cornering".

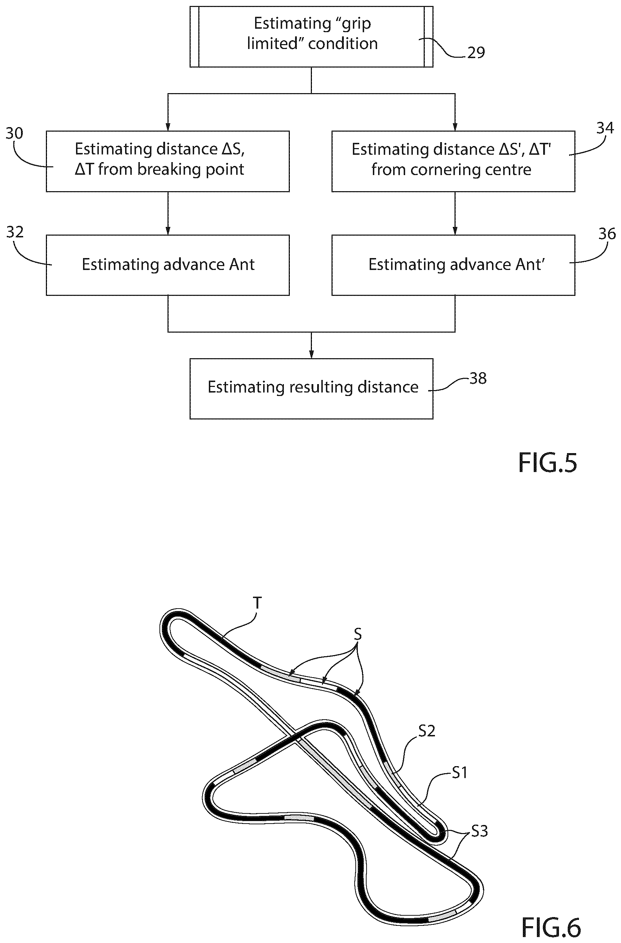

In detail and as schematically shown in Figure 5, the actuation control unit 14 is configured to continuously estimate over time, while the road vehicle 1 is in motion, the spatial distance $\Delta S$ to the forthcoming breaking point PS and the corresponding time distance $\Delta T$, based on the speed of the road vehicle 1, step 30.

The same actuation control unit 14 also estimates a first time advance Ant with respect to the estimated braking point, which takes into account the actuation time of the active aerodynamic appendage 12, step 32.

The actuation control unit 14 is also configured to continuously estimate over time, while the road vehicle 1 is in motion, the spatial distance $\Delta S'$ from the forthcoming cornering section demanding a high aerodynamic load (in particular from the relevant corner central point, as discussed above) and the corresponding time distance $\Delta T'$, based on the speed of the road vehicle 1, step 34.

The same actuation control unit 14 also estimates a second time advance Ant' with respect to the aforesaid cornering section, step 36.

In particular, this second time advance Ant' is greater than the aforesaid first time advance Ant' relative to the "braking" case, since it has to account a part given by the time for actuating the active aerodynamic appendage 12 and a further part given by the time interval between the beginning of the corner and the centre of the corner, so as to guarantee the maximum aerodynamic load already from the beginning of the cornering.

The actuation control unit 14 then determines, step 38, a time distance $\Delta g$ resulting from the subsequent "grip limited" condition, determining the minimum of the aforesaid time distances, decreased by the corresponding time advance, based on the following expression:

$$\Delta g \;=\; \min[(\Delta T - Ant), (\Delta T' - Ant')].$$

Basically, the combination of the two distance estimates (from the forthcoming braking point or the forthcoming corner respectively) makes it possible to detect, instant by instant, the demand for activation or holding of the high aerodynamic load condition with the right amount of time in advance, so as to obtain a desired increase in the performance of the road vehicle 1 in all the "grip limited" zones of the track.

According to a particular aspect of the present solution, the described predictive control solution of the actuation of the active aerodynamic appendages can be advantageously implemented in synergy with an optimisation strategy of the powertrain 4 of the road vehicle 1, in particular aimed at assisting the performance driving of the same road vehicle 1 while driving on a racetrack.

This optimisation strategy generally comprises providing a surplus of power delivery selectively along the track according to the position of the road vehicle 1 on the same track, in particular by using the auxiliary engine, in the example the electric engine 5.

This strategy is a function of the characteristics of the track and can advantageously take into account the state of charge of the battery pack 6 associated with the electric engine 5, a mode of recharging the same battery pack 6 during the course of the track and other factors, such as the intentions of the driver of the road vehicle 1, for example in terms of the number of consecutive laps to be implemented.

An example of such an optimisation strategy for managing the powertrain 4 of the road vehicle 1 is described in detail in Patent Application EP 4 112 403 A1 on behalf of this Applicant.

This strategy comprises determining, as a function of a dynamic model of the road vehicle 1 (i.e. of a simplified representation by means of equations of the dynamic behaviour of the same vehicle) and as a function of the characteristics of the track, a convenience index relating to the convenience of using the energy of the battery pack 6 by the electric engine 5 in a respective zone of the track (this index being indicative of how much time, in particular lap time, the road vehicle 1 saves in investing energy in that particular zone compared to not investing it).

The strategy then comprises subdividing the track into a plurality of (consecutive) sectors and assigning to each of these sectors a relative convenience index value; according to this convenience index, the electronic control unit 10 of the road vehicle 1 controls the power delivery by the powertrain 4, in particular the selective delivery of electric power to the drive wheels via the electric engine 5.

In particular, the control unit 10 determines one or more boost sectors along the track where it is most convenient to deliver electrical power.

In greater detail, the above strategy provides to: determine, depending on the characteristics of the track (which can for example be determined by satellite detection on a reconnaissance lap or be acquired from a database) the curvature of the track as a function of the space travelled; and process, depending on the curvature and the dynamic model of the road vehicle 1, a target speed profile at which the road vehicle 1 optimally travels along the track.

Depending on the estimated target speed profile, the braking points along the race track are identified, so that the estimated signal Dis indicative of the distance from the forthcoming braking point PS is subsequently available, instant by instant; and also the central points ("Apex") of the cornering sections of the track, at which the lateral acceleration on the road vehicle 1 has a local maximum/minimum value, are identified.

The division into sectors and the assignment of the convenience index values are then carried out on the basis of the speed profile and the position of the braking points and central points of the cornering sections identified along the track.

In general, the greater the distance between the position of the road vehicle 1 and a forthcoming braking point, the more convenient it is to use the additional thrust of the auxiliary engine, e.g. of the electric engine 5, for example at the exit of a cornering section, in the section following the respective central point.

The actuation control unit 14 may therefore cooperate with a control unit designed to implement the aforesaid optimisation strategy for managing the powertrain 4, or it may itself be configured to implement such an optimisation strategy, in addition to and synergically with the management of the actuation of the active aerodynamic appendage 12.

As schematically shown in Figure 6, a track T may thus be subdivided into a plurality of sectors S, each of which may be assigned a category indicative of an associated power demand by the powertrain 4 (in particular of an additional power, "boost", deliverable by the electric engine 5) and/or of an associated aerodynamic demand to be implemented by means of the at least one aerodynamic appendage 12.

As an example, in Figure 6 the track is divided into three categories of sectors S, which are respectively associated with: a high power demand ("Power Boost ON"), whereby the accessory power is delivered via the electric engine 5 (sectors denoted by S1); a limited power demand (so-called "Power limited"), whereby the accessory power is not delivered via the electric engine 5 (sectors denoted by S2); and a high aerodynamic load demand due to the presence of a grip limited condition, for example due to a braking condition or due to the presence of a cornering section (sectors indicated with S3).

In particular, in this example, the actuation control unit 14 can be configured to adjust the active aerodynamic appendage 12 so as to increase the aerodynamic load in limited grip sectors (sectors S3); and also to adjust the active aerodynamic appendage 12 so as to minimise aerodynamic drag at least in sectors where power delivery is limited (sectors S2).

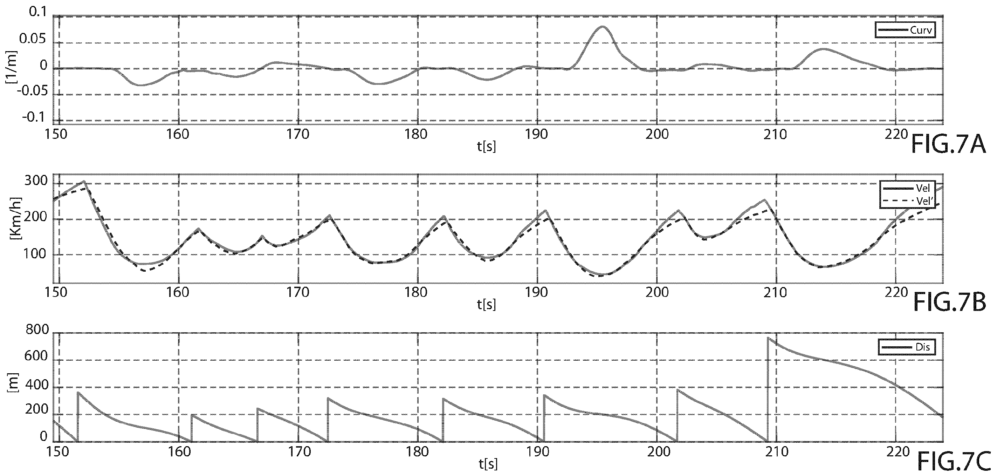

For the sake of completeness, and with reference to what has just been discussed, Figure 7A shows the trend of the estimated curvature of the track as a function of time (curvature signal Curv), relative to the aforesaid track T; Figure 7B shows in a continuous line the trend of a corresponding profile of estimated speed Vel and in a dashed line the trend of a profile of detected speed Vel' (obtained by means of sensors); and Figure 7C shows the trend of the aforesaid signal Dis indicative of the distance from the forthcoming braking point PS, again referring to the same track.

From what has been discussed, the advantages of this solution are evident.

In particular, this solution makes it possible to implement the adjustment of active aerodynamic appendages in a road vehicle in advance relative to the driver's actual demands and the actual dynamic response of the vehicle.

This allows to anticipate and/or maintain an increased aerodynamic load in grip-limited areas, to the benefit of the vehicle stability and a related increase in performance.

Similarly, it is possible to anticipate a demand for decreased aerodynamic load, for example under conditions of limited power delivery from a vehicle powertrain.

Finally, it is clear that modifications and variations can be made to what herein described and shown without thereby departing from the scope of protection, as defined by the claims.

In particular, it should be noted that, although the previous discussion referred specifically to the solution applied to the context of performance driving on the racetrack, this solution can also be advantageously applied to driving in other contexts, on public or private roads.

In addition, the described solution can also be implemented in combination with traditional solutions for the adjustment of active aerodynamic appendages based on the detection of the dynamic conditions of the road vehicle by means of suitable sensors.

In general, the solution described can be advantageously applied regardless of the type of active aerodynamic appendages of the road vehicle and regardless of the type of propulsion of the same road vehicle, whether traditional, endothermic, hybrid or all-electric.

**Claims**

1. A system for controlling at least one active aerodynamic appendage (12) of a road vehicle (1), comprising an actuation control unit (14) configured to implement a predictive control of said active aerodynamic appendage (12), based on an estimation, performed dynamically while the road vehicle (1) is in motion, of an aerodynamic load demand of the road vehicle (1) in at least one route section subsequent to one currently travelled.

2. The system according to claim 1, wherein said actuation control unit (14) is configured to estimate a forthcoming zone of limited grip associated with said subsequent route section and to implement, in advance of the occurrence of said zone of limited grip, an adjustment of said active aerodynamic appendage (12) designed to determine an increase in aerodynamic load for said road vehicle (1).

3. The system according to claim 2, wherein said actuation control unit (14) is configured to determine a distance from the forthcoming zone of limited grip and a corresponding time interval, as a function of a speed of said road vehicle (1); and to further determine a time advance referred to said time interval, so as to take into account an actuation time required for actuating said active aerodynamic appendage (12).

4. The system according to claim 3, wherein said actuation control unit (14) is configured to determine actuation of the active aerodynamic appendage (12) at a time instant that is a function of said time advance.

5. The system according to any one of claims 2-4, wherein said actuation control unit (14) is configured to maintain a set adjustment of said active aerodynamic appendage (12) for a holding interval, such that a desired aerodynamic load configuration is ensured throughout a duration of said zone of limited grip.

6. The system according to any one of claims 2-5, wherein said zone of limited grip corresponds to a subsequent braking section or a subsequent cornering section of said route.

7. The system according to claim 6, wherein said actuation control unit (14) is configured to: estimate a first spatial distance ($\Delta S$) with respect to a subsequent braking point (PS) associated with said subsequent braking section and a corresponding first time distance ($\Delta T$) based on the speed of the road vehicle (1); and determine a first time advance (Ant) referred to said first time distance ($\Delta T$), which takes into account an actuation time of the active aerodynamic appendage (12).

8. The system according to claim 7, wherein said actuation control unit (14) is further configured to estimate a second spatial distance ($\Delta S'$) with respect to a central point (Apex) associated with said subsequent cornering section and a second time distance (ΔT') based on the speed of the road vehicle (1); and determine a second time advance (Ant') related to said second time distance (ΔT'), which takes into account the actuation time of the active aerodynamic appendage (12) and also a time interval between an initial point (In) of said cornering section and the central point (Apex) of said cornering section.

9.  The system according to claim 8, wherein said actuation control unit (14) is configured to determine the instant of actuation of said active aerodynamic appendage (14) as a function of a resultant time distance (Δg) with respect to said zone of limited grip, given by the minimum between said first and second time distances decreased by the corresponding first and second time advances, based on the following expression:

$$\Delta g = min[(\Delta T - Ant), (\Delta T' - Ant')].$$

10. The system according to any one of claims 6-9, wherein said actuation control unit (14) is configured to determine whether said subsequent cornering section corresponds to said zone of limited grip, if a lateral acceleration (Acc_lat) on said road vehicle (1) at the center point (Apex) of said cornering section is greater than a lateral acceleration threshold (Th_lat).

11. The system according to any one of the preceding claims, wherein said actuation control unit (14) is configured to determine a forthcoming condition in which a reduction in aerodynamic drag of said road vehicle (1) is required and to implement, in advance of the occurrence of said condition, an adjustment of said active aerodynamic appendages such that a decrease in aerodynamic drag of said road vehicle (1) is determined.

12. The system according to any one of the preceding claims, wherein said actuation control unit (14) is configured to implement, in synergy with the predictive control of said active aerodynamic appendage (12), an optimization strategy for managing a powertrain (4) of said road vehicle (1), aimed at performance driving assistance; wherein said optimization strategy comprises managing an additional power delivered by said powertrain (4) based on the position of said road vehicle (1) along said route.

13. The system according to claim 12, wherein said powertrain (4) comprises a main engine and at least one auxiliary engine (5) configured to provide a selective power increase under certain operating conditions; and wherein said actuation control unit (14) is configured to implement an adjustment of said active aerodynamic appendage (12) such that it results in a decrease in the aerodynamic load of said road vehicle (1) at least in the case in which said optimization strategy results in a limited power output from said powertrain (4), in the absence of said power increase.

14. A road vehicle (1) comprising at least one active aerodynamic appendage (12) and further comprising a system for controlling said active aerodynamic appendage (12), according to any one of the preceding claims.

15. A method of controlling at least one active aerodynamic appendage (12) of a road vehicle (1), comprising implementing a predictive control of said active aerodynamic appendage (12), based on an estimation, dynamically performed while the road vehicle (1) is in motion, of an aerodynamic load demand of the road vehicle (1) in a route section subsequent to one currently travelled.

FIG.1

FIG.2

FIG.3A

FIG.3B

FIG.3C

Curv

FIG.4A

Acc_lat

FIG.4B

FIG.4C

Estimating "grip
limited" condition ⌐29

Estimating distance ΔS,
ΔT from breaking point ⌐30

Estimating distance ΔS', ΔT'
from cornering centre ⌐34

Estimating advance Ant ⌐32

Estimating advance Ant' ⌐36

Estimating resulting distance ⌐38

## FIG.5

## FIG.6

FIG.7A

FIG.7B

FIG.7C

EP 4 671 095 A1

Europäisches
Patentamt

European
Patent Office

Office européen
des brevets

## EUROPEAN SEARCH REPORT

**Application Number**

EP 25 18 4443

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/241377 A1 (ROGERS MATTHEW C C [US] ET AL) 6 October 2011 (2011-10-06) | 1,11,14, 15 | INV. B62D35/00 |
| A | * paragraph [0068] - paragraph [0069] * <br> * paragraph [0075] - paragraph [0085]; figures 10,11 * | 2-10,12, 13 | B62D37/02 |
| | ----- | | |
| A | DE 10 2012 210508 A1 (BAYERISCHE MOTOREN WERKE AG [DE]) 24 December 2013 (2013-12-24) * paragraph [0027] - paragraph [0035]; figures 1,2 * | 1-15 | |
| | ----- | | |
| A | US 2019/263458 A1 (FAHLAND JASON D [US] ET AL) 29 August 2019 (2019-08-29) * paragraph [0033] - paragraph [0073]; figures 1-5 * | 1-15 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 8 October 2025 | Burley, James |

EPO FORM 1503 03.82 (P04C01)

## ANNEX TO THE EUROPEAN SEARCH REPORT
## ON EUROPEAN PATENT APPLICATION NO.

EP 25 18 4443

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2025

| Patent document cited in search report | Publication date | Patent family member(s) | | Publication date |
|---|---|---|---|---|
| US 2011241377 A1 | 06-10-2011 | NONE | | |
| DE 102012210508 A1 | 24-12-2013 | NONE | | |
| US 2019263458 A1 | 29-08-2019 | CN | 110203194 A | 06-09-2019 |
| | | DE | 102019104739 A1 | 29-08-2019 |
| | | US | 2019263458 A1 | 29-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000014566

- EP 4112403 A1